Europäisches Patentamt

European Patent Office

Office européen des brevets

(19)

(11) **EP 1 083 512 A1**

(12) ## DEMANDE DE BREVET EUROPEEN

(43) Date de publication:
**14.03.2001 Bulletin 2001/11**

(51) Int Cl.⁷: **G06K 7/10**

(21) Numéro de dépôt: **00390014.9**

(22) Date de dépôt: **08.09.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **10.09.1999 FR 9911357**

(71) Demandeur: **INTERMEC SCANNER TECHNOLOGY CENTER S.A.**
**31670 Labege Cédex (FR)**

(72) Inventeurs:
• **Manine, Pierre-Marie**
**31820 Pibrac (FR)**
• **Massieu, Jean-Louis**
**82000 Montauban (FR)**
• **Puybras, Bernard**
**31000 Toulouse (FR)**
• **Serres, Bernard**
**31280 Dremil Lafage (FR)**
• **Thuries, Serge**
**31240 Saint Jean (FR)**

(74) Mandataire:
**Cabinet BARRE LAFORGUE & associés**
**95, rue des Amidonniers**
**31000 Toulouse (FR)**

(54) **Dispositif optoéléctronique d'acquisition d'images de plans-objets, notamment de codes barres**

(57) L'invention concerne un dispositif optoélectronique d'acquisition d'images de plans-objets, notamment de codes à barres, comprenant des moyens de déviation (7, 8) du faisceau incident émis par une source d'éclairage (4), comportant des moyens de déviation cycliques (8), oscillants ou rotatifs, portés par des moyens moteurs (9) aptes à faire osciller ou tourner lesdits moyens de déviation cycliques de façon que le faisceau incident décrive, lors de chaque cycle, un balayage angulaire adapté pour générer sur le plan-objet au moins une ligne élémentaire de balayage, et des moyens d'asservissement des moyens moteurs (9), connectés, d'une part, à une horloge de façon à recevoir un signal de transfert $\Phi_{TG}$, et d'autre part auxdits moyens moteurs, et adaptés pour synchroniser en phase et en fréquence le début de chaque cycle de balayage avec le signal $\Phi_{TG}$ délivré par l'horloge.

Fig 2

**Description**

L'invention concerne un dispositif optoélectronique d'acquisition d'images de plans-objets, notamment de codes à barres.

Il existe à l'heure actuelle deux grandes familles de dispositifs optoélectroniques pour la lecture de codes à barres, qui présentent chacune des avantages propres : les dispositifs de lecture par CCD et les dispositifs de lecture par laser.

Les dispositifs de lecture par CCD comprennent, en premier lieu, un système d'éclairage constitué généralement de diodes électroluminescentes haute luminosité disposées de façon à permettre d'illuminer les codes à barres. Ces dispositifs comprennent également un objectif adapté pour former l'image du code à barres sur les éléments photosensibles du CCD durant un temps de pause appelé temps d'intégration. A l'issue de ce temps d'intégration, une horloge délivre un signal de transfert $\Phi_{TG}$ commandant le transfert de l'information contenue dans les éléments photosensibles du CCD vers un registre à décalage analogique. Une deuxième horloge délivre ensuite un signal pixel $\Phi_{pix}$ qui commande la lecture de façon séquentielle de l'image du code. Pendant cette lecture séquentielle, une autre image peut alors être exposée dans les éléments photosensibles du CCD.

Ce type de dispositifs de lecture par CCD présente principalement deux avantages. En premier lieu, le balayage de l'image est entièrement électronique et ne nécessite donc aucune pièce mobile. De plus, cette technologie CCD autorise des vitesses de lecture élevées pour un coût de revient inférieur à celui des dispositifs à technologie laser.

Les dispositifs de lecture par laser comprennent, quant à eux, en premier lieu, une source, généralement une diode laser, d'émission d'un faisceau laser qui est focalisé par une optique. Ils comprennent également un mécanisme de miroirs tournants ou oscillants adaptés pour dévier le faisceau laser de façon que ce dernier décrive un balayage angulaire dont la projection sur le code à barres forme une ligne élémentaire de balayage. Ces dispositifs comprennent, en outre, un système électro-optique positionné de façon à intercepter le début du balayage et à délivrer une impulsion représentative du début de la ligne, qui permet de synchroniser le système de décodage. Selon cette technologie, la lumière laser réfléchie par le code à barres est collectée soit en empruntant le chemin inverse du faisceau incident, soit par une rétro-collection globale fixe, et dirigée vers un système photosensible, tel qu'une photodiode, qui crée un signal électrique instantané, c'est-à-dire sans accumulation de charges, représentatif de l'image du code à barres.

Ce type de dispositif de lecture par laser présente l'avantage d'offrir une profondeur de champ accrue et une insensibilité au bouger en particulier lorsque le dispositif est déplacé perpendiculairement par rapport aux barres du code.

Les différences de conception de ces deux types de dispositifs optoélectroniques, notamment au niveau du traitement de l'image, font qu'à l'heure actuelle il existe deux gammes de produits entièrement distincts appartenant à l'une et l'autre des deux familles.

La présente invention vise à pallier cet inconvénient et a pour objectif essentiel de fournir un dispositif optoélectronique conçu pour pouvoir assurer la lecture et le décodage d'images issues soit d'une tête de lecture de type CCD soit d'une tête de lecture de type laser.

A cet effet, l'invention vise un dispositif optoélectronique d'acquisition d'images de plans-objets, notamment de codes à barres, comprenant :

- une source d'éclairage apte à délivrer un faisceau incident d'éclairage,
- un capteur électronique d'acquisition des images,
- des moyens optiques aptes à permettre de former les images sur le capteur électronique,
- des moyens de traitement aptes à assurer la lecture et le décodage des images acquises par le capteur et comportant une horloge adaptée pour délivrer un signal de transfert $\Phi_{TG}$ de chaque image acquise par ledit capteur.

Selon l'invention, ce dispositif se caractérise en ce qu'il comprend :

- des moyens de déviation du faisceau incident comportant des moyens de déviation cycliques, oscillants ou rotatifs, portés par des moyens moteurs aptes à faire osciller ou tourner lesdits moyens de déviation cycliques de façon que le faisceau incident décrive, lors de chaque cycle, un balayage angulaire adapté pour générer sur le plan-objet au moins une ligne élémentaire de balayage,
- des moyens d'asservissement des moyens moteurs, connectés, d'une part, à l'horloge de façon à recevoir le signal de transfert $\Phi_{TG}$, et d'autre part auxdits moyens moteurs, et adaptés pour synchroniser en phase et en fréquence le début de chaque cycle de balayage avec le signal $\Phi_{TG}$ délivré par l'horloge.

L'invention a donc consisté à substituer à l'ensemble électro-optique d'un lecteur de codes à barres de technologie CCD (barrette CCD, objectif, éclairage), un module de lecture de codes à barres par faisceau laser conçu pour être piloté par les moyens de traitement d'un lecteur de technologie CCD.

Pour ce faire, le dispositif selon l'invention comprend des moyens d'asservissement qui permettent de piloter le module de lecture par faisceau laser à partir du signal de transfert $\Phi_{TG}$ disponible, de façon à fournir un signal analogique comparable à celui provenant d'un capteur CCD qui peut donc être traité et décodé par les moyens de traitement de technologie CCD.

Le concept de l'invention permet donc, à partir d'une base unique incorporant des moyens de traitement de technologie CCD, de décliner deux familles de dispositifs optoélectroniques de technologies CCD et laser.

Selon une première variante avantageuse de l'invention :

-   les moyens de déviation cycliques comprennent un polygone rotatif comportant n facettes réfléchissantes,
-   les moyens moteurs comprennent un moteur pas à pas sur lequel est monté le polygone rotatif, ledit moteur présentant un nombre de pas par tour égal à kn, avec k = x ou 1/x, x étant un nombre entier,
-   les moyens d'asservissement comprennent des moyens de commande séquentielle du moteur pas à pas aptes à réaliser des phases de commande dudit moteur pas à pas synchronisées avec le signal $\Phi_{TG}$ délivré par l'horloge.

Selon cette variante comportant un polygone rotatif, l'utilisation d'un moteur pas à pas permet de supprimer la contrainte d'asservissement en vitesse. De plus, le fait de prévoir un moteur dont le nombre de pas est multiple ou sous-multiple du nombre de facettes du polygone permet de supprimer la contrainte d'asservissement en phase ainsi que la détection du début de balayage. De ce fait, des moyens de commande séquentielle extrêmement simples suffisent pour réaliser les phases de commande du moteur pas à pas à partir du seul signal de transfert $\Phi_{TG}$.

Ces moyens de commande peuvent ainsi avantageusement consister en une électronique séquentielle comportant des bascules flip-flop aptes à générer deux phases de pilotage du moteur pas à pas.

En outre, afin d'assurer la mise en phase du signal vidéo et du signal de transfert $\Phi_{TG}$, le dispositif selon l'invention comprend avantageusement des moyens d'ajustement préalable de la position angulaire du corps du moteur pas à pas.

A cet effet, et de façon avantageuse, le corps du moteur est disposé en sandwich entre deux éléments fixes dans lesquels sont montés rotatifs les paliers dudit moteur, les moyens d'ajustement comportant des moyens de fixation du corps dudit moteur à au moins un desdits éléments fixes, après réglage préalable de la position angulaire dudit corps.

Par ailleurs, selon un mode de réalisation avantageux, l'axe de rotation du miroir polygonal est incliné par rapport aux arêtes des facettes, d'un angle a adapté pour que chaque facette engendre une ligne de balayage décalée et parallèle à celle engendrée par les facettes voisines.

Cette disposition permet d'obtenir de façon très simple un décalage des lignes de balayage générées par chaque facette qui permet de balayer le code selon une direction parallèle aux barres.

De façon avantageuse, l'angle a d'inclinaison de l'axe de rotation du polygone rotatif est sensiblement égal au quart de l'angle sous-tendu par les arêtes délimitant une facette.

Selon une seconde variante avantageuse de réalisation visant un dispositif comportant, classiquement pour la technologie CCD, une horloge délivrant un signal pixel $\Phi_{pix}$ de lecture séquentielle de chaque image acquise par le capteur :

-   les moyens de déviation cyclique comprennent un miroir oscillant monté sur des moyens moteurs aptes à le faire osciller avec une amplitude prédéterminée entre deux positions extrêmes,
-   les moyens d'asservissement des moyens moteurs comprennent :

    - des moyens de comptage incrémentés par le signal $\Phi_{pix}$ de lecture séquentielle, et adaptés pour être remis à zéro lors de l'émission d'un signal de transfert $\Phi_{TG}$,
    - des moyens de comparaison de la valeur des moyens de comptage avec une valeur mémorisée, obtenue par apprentissage préalable, représentative du déphasage nécessaire pour obtenir la synchronisation en phase du début de chaque cycle de balayage avec le signal $\Phi_{TG}$, lesdits moyens de comparaison étant adaptés pour délivrer un signal de synchronisation de phase lors de la correspondance entre la valeur mémorisée et la valeur des moyens de comptage.
    - des moyens de commande des moyens moteurs, recevant le signal de transfert $\Phi_{TG}$ et le signal de synchronisation de phase, et adaptés pour synchroniser lesdits moyens moteurs avec ledit signal de transfert $\Phi_{TG}$.

Selon cette variante comportant un miroir oscillant, le signal de transfert $\Phi_{TG}$ est utilisé pour asservir en phase et en vitesse les oscillations dudit miroir. De plus, le signal pixel $\Phi_{pix}$ associé à des moyens de comptage et de comparaison permet, à partir d'une valeur de déphasage mémorisée, obtenue dans une phase préalable d'apprentissage, d'assurer la mise en phase du signal vidéo et du signal de transfert $\Phi_{TG}$.

En outre, selon cette variante et de façon avantageuse, les moyens de commande des moyens moteurs comprennent une électronique comportant des bascules D aptes à générer des signaux de commande en mode oscillatoire des moyens moteurs.

D'autres caractéristiques, buts et avantages de l'invention ressortiront de la description détaillée qui suit en référence aux dessins annexés qui représentent à titres d'exemples non limitatifs, un mode de réalisation préférentiel d'un module de lecture de technologie laser conforme à l'invention, ainsi que trois variantes de moyens d'asservissement conformes à l'invention. Sur ces figures :

- la figure 1 est une vue en perspective d'un module de lecture à polygone rotatif conforme à l'invention,
- la figure 2 est une vue en perspective en mode éclaté des divers composants de ce module de lecture,
- la figure 3a est un schéma électronique d'une première variante d'une unité de commande du moteur pas à pas d'entraînement du polygone rotatif, conforme à l'invention,
- la figure 3b représente le signal de transfert $\Phi_{TG}$ et les signaux de commande générés par cette unité de commande,
- la figure 4a est un schéma électronique d'une seconde variante d'une unité de commande du moteur pas à pas d'entraînement du polygone rotatif, conforme à l'invention,
- la figure 4b représente le signal de transfert $\Phi_{TG}$ et les signaux de commande générés par cette unité de commande,
- et la figure 5 est un schéma électronique d'une unité de commande du moteur d'entraînement d'un miroir oscillant, conforme à l'invention.

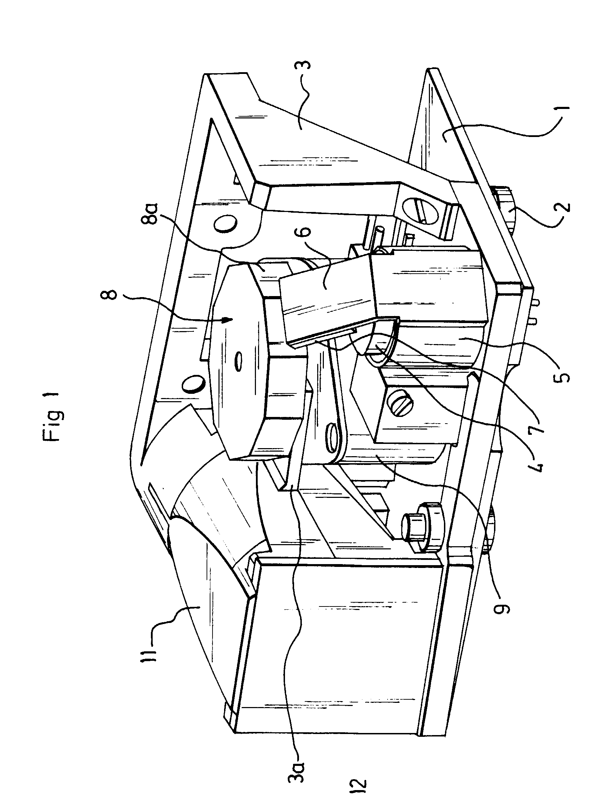

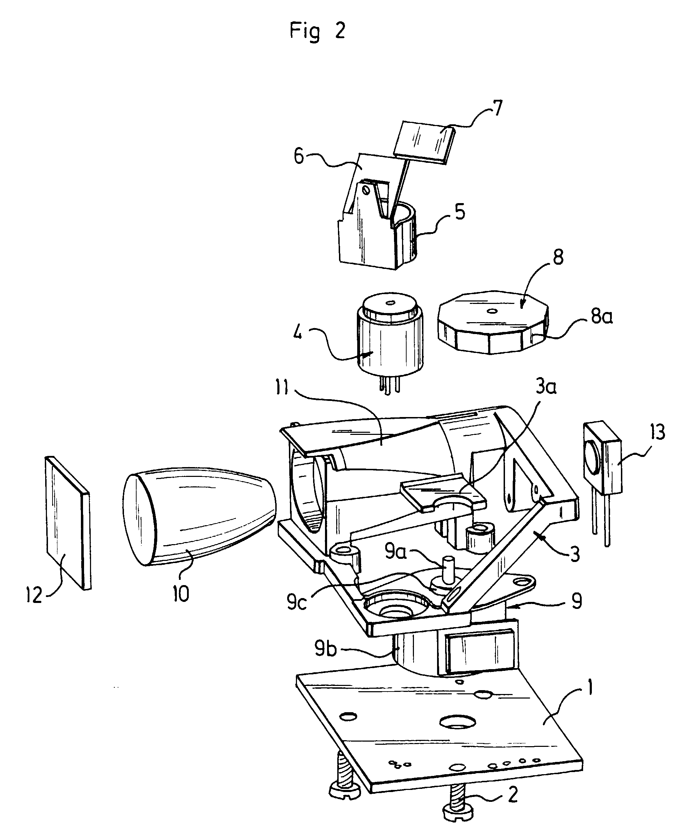

Le module de lecture de technologie laser représenté aux figures 1 et 2 est conçu pour pouvoir se substituer à un ensemble électro-optique d'un lecteur de code à barres de technologie CCD, et pour présenter à cet effet une compatibilité totale avec cet ensemble, tant d'un point de vue électrique et mécanique (encombrement et chemin optique), que d'un point de vue logiciel (lecture/décodage).

Ce module de lecture comprend une carte électronique 1 sur laquelle est fixé au moyen de vis 2 un socle 3 en forme de berceau sur lequel sont montés les divers éléments électro-optiques.

Le premier de ces éléments consiste en une diode laser associée à une optique de focalisation, représentées de façon générale sous la référence 4 aux figures 1 et 2. Cette diode laser est logée dans une bague 5 disposée de façon que le faisceau laser soit émis orthogonalement par rapport à la carte électronique 1.

De plus, cette bague 5 est prolongée par un déflecteur 6 incliné de 45° par rapport à l'axe de la dite bague, en sous face duquel est fixé un miroir 7 apte à dévier de 90° le faisceau délivré par la diode laser 4.

Le deuxième élément consiste en un polygone 8 doté de facettes telles que 8a réfléchissantes, disposé de façon à intercepter le faisceau dévié par le miroir 7. Ce polygone 8 est monté sur l'arbre 9a d'un moteur pas à pas 9 dont le corps 9b est maintenu en sandwich par ses paliers tels que 9c entre un bras 3a du socle 3 et la carte électronique 1.

Le troisième élément consiste en un collecteur de lumière non imageant 10 de forme paraboloïdale disposé de façon à recueillir la lumière réfléchie par le spot laser où qu'il soit dans la zone de lecture du dispositif.

Ce collecteur 10 est logé dans un tube 11 usiné d'un seul tenant avec le socle 3, obturé par un filtre polarisant 12 destiné à permettre de s'affranchir des variations de lumière et d'éviter de saturer le quatrième élément consistant en une photodiode 13 disposée à l'arrière dudit collecteur.

A titre d'exemple, le moteur 9 est un moteur à 20 pas par tour dont le faible encombrement permet de loger le module de lecture dans l'encombrement équivalent à un module de lecture CCD. De plus, la rétro-collection utilisant un collecteur non imageant 10, le miroir polygonal 8, réalisé en plastique injecté, présente de faibles dimensions (par exemple D = 15 mm, H = 3 mm), et donc une faible inertie.

Egalement à titre d'exemple, avec un polygone 8 à 10 facettes 8a entraîné à 25 tours/seconde, on obtient un balayage "grand angle" de 72° dont 60° utiles à 250 balayages/seconde. Avec un polygone 8 à 20 facettes 8a entraîné à 25 tours/seconde, on obtient un balayage d'angle égal à 36° dont 30 utiles à 500 balayages/seconde.

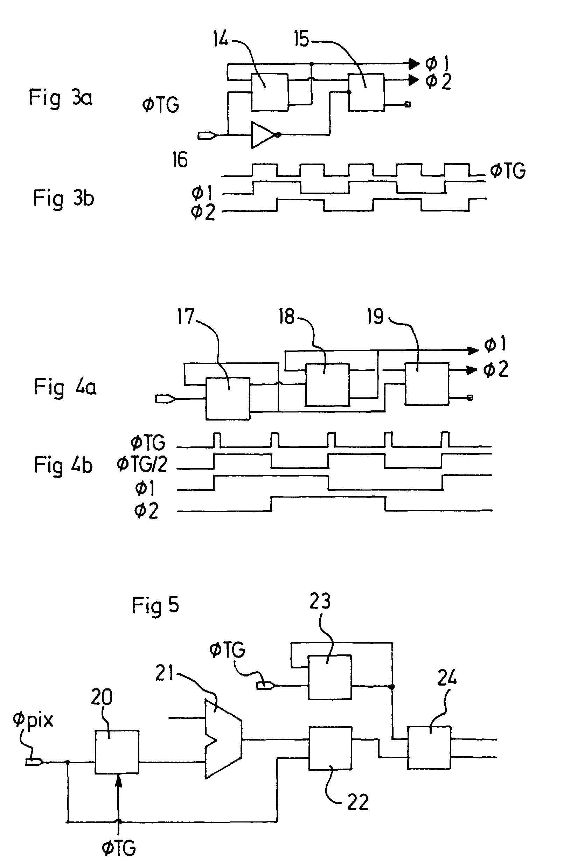

La figure 3a représente un premier exemple d'interface électronique permettant de piloter un module de lecture tel que décrit ci-dessus et de réaliser les phases de commande du moteur pas à pas 8 à partir du seul signal de transfert $\Phi_{TG}$ délivré par le module de traitement du dispositif optoélectronique. Pour cet exemple, le moteur 9 est un moteur bipolaire à 20 pas par tour, et le polygone 8 présente 10 facettes 8a.

Tel que représenté à cette figure, cette interface comprend deux bascules flip-flop 14, 15 : une première bascule 14 vers l'entrée CLK de laquelle est délivré le signal $\Phi_{TG}$, et une seconde bascule 15 vers l'entrée CLK de laquelle est délivre le signal $\Phi_{TG}$ après inversion de ce dernier par un inverseur 16.

De plus, la sortie Q de la première bascule 14 est, en premier lieu rebouclée sur l'entrée D de cette bascule 14, et en second lieu, délivre une première phase $\Phi$ 1 de commande du moteur pas à pas 9.

La seconde phase $\Phi$ 2 de commande de ce moteur pas à pas 9 est délivrée au niveau de la sortie Q de la seconde bascule 15.

Tel que représenté à la figure 3b, une telle interface est adaptée pour générer deux phases $\Phi1$, $\Phi2$ en quadrature pour piloter le moteur pas à pas 9, dont les périodes sont le double de la période du signal $\Phi_{TG}$. De plus, pour que le sens de rotation soit parfaitement déterminé, $\Phi$ 2 est en quadrature retard sur $\Phi$ 1.

La figure 4a représente un deuxième exemple d'interface électronique permettant de piloter un module de lecture tel que décrit ci-dessus à partir du seul signal de transfert $\Phi_{TG}$. Pour cet exemple, le moteur 9 est un moteur bipolaire à 20 pas par tour, et le polygone 8 présente 20 facettes.

Tel que représenté à cette figure, l'interface comprend trois bascules flip-flop 17, 18, 19 agencées de façon que :

- la première bascule 17 reçoive le signal $\Phi_{TG}$ au niveau de son entrée CLK, tandis que sa sortie Q est reliée à l'entrée CLK de la deuxième bascule 18, et sa sortie Q, en premier lieu rebouclée sur l'entrée D de cette bascule 17, et en second lieu, reliée à l'entrée CLK de la troisième bascule 19.

- la sortie Q de la deuxième bascule 18 soit reliée à l'entrée CLK de la troisième bascule 19, tandis que la sortie Q de cette deuxième bascule 18, est en premier lieu rebouclée sur l'entrée D de cette dernière, et délivre en second lieu une première phase $\Phi1$ de commande du moteur pas à pas 9.

- La seconde phase $\Phi2$ de commande du moteur pas à pas 9 soit délivrée au niveau de la sortie Q de la troisième bascule 19.

Tel que représenté, à la figure 4b, une telle interface est adaptée pour générée :

- un signal $\Phi_{TG}$ /2 au niveau de la sortie $\overline{Q}$ de la première bascule 17,
- deux phases $\Phi1$, $\Phi2$ en quadrature pour piloter le moteur pas à pas 9, dont les périodes sont le quadruple de la période du signal $\Phi_{TG}$. De plus, $\Phi2$ est en quadrature retard sur $\Phi1$ de façon que le sens de rotation du moteur pas à pas 9 soit parfaitement déterminé.

Pour les deux interfaces ci-dessus décrites, l'asservissement en phase et en vitesse est donc réalisé par le biais de bascules flip-flop à partir du seul signal de transfert $\Phi_{TG}$.

Concernant la mise en phase initiale de ce signal $\Phi_{TG}$ et du signal analogique délivré par la photodiode 13, cette dernière est réalisée dans une phase préalable par ajustement de la position angulaire du corps 9b du moteur pas à pas 9, puis fixation par tout moyen connu en soi dudit moteur par rapport au socle 3, une fois cette mise en phase obtenue.

La figure 5 représente quant à elle une interface adaptée pour commander les oscillations d'un miroir oscillant (non représenté) équipant un module de lecture de technologie laser de type classique. Selon cette variante, les signaux $\Phi_{pix}$ et $\Phi_{TG}$ délivrés par le module de traitement du dispositif optoélectronique sont utilisés pour assurer la mise en phase et l'asservissement en phase et en vitesse du moteur entraînant l'oscillation du miroir par rapport au signal de transfert $\Phi_{TG}$.

En premier lieu, en vue d'assurer la mise en phase, cette interface comporte un compteur 20 incrémenté par le signal $\Phi_{pix}$ et remis à zéro lors de l'émission d'un signal $\Phi_{TG}$.

La valeur incrémentée de ce compteur 20 est délivrée vers une des entrées d'une comparateur 21 à des fins de comparaison de cette valeur avec une valeur mémorisée obtenue dans une phase préalable par apprentissage et représentative du décalage dans le temps nécessaire après l'émission du signal de transfert pour assurer la mise en phase.

Le signal émis par ce comparateur 21, représentatif d'une correspondance entre les valeurs incrémentée et mémorisée, est transmis vers l'entrée D d'une bascule D 22 dont le fonctionnement est réglé par le signal $\Phi_{pix}$. Une telle bascule D, moyennant le décalage d'un impulsion du signal transmis par le comparateur 21, permet d'obtenir une mise en forme correcte dudit signal.

L'asservissement en phase et en vitesse est quant à lui obtenu au moyen de deux bascules D 23, 24 :

- une première bascule 23 dont le fonctionnement est réglé par le signal $\Phi_{TG}$ et dont la sortie Q est, en premier lieu rebouclée sur l'entrée D de ladite bascule, et en second lieu, reliée à l'entrée D de la seconde bascule 24,
- une seconde bascule 24 dont le fonctionnement est réglé par le signal délivré par la bascule 22 de mise en phase et dont les sorties sont reliées au moteur d'actionnement du miroir oscillant.

**Revendications**

1. Dispositif optoélectronique d'acquisition d'images de plans-objets, notamment de codes à barres, comprenant :

- une source d'éclairage (4) apte à délivrer un faisceau incident d'éclairage,
- un capteur électronique (13) d'acquisition des images,
- des moyens optiques (10) aptes à permettre de former les images sur le capteur électronique,
- des moyens de traitement (1) aptes à assurer la lecture et le décodage des images acquises par le capteur (13) et comportant une horloge adaptée pour délivrer un signal de transfert $\Phi_{TG}$ de chaque image acquise par ledit capteur,

ledit dispositif étant caractérisé en ce qu'il comprend :

- des moyens de déviation (7, 8) du faisceau incident comportant des moyens de déviation cycliques (8), oscillants ou rotatifs, portés par des moyens moteurs (9) aptes à faire osciller ou tourner lesdits moyens de déviations cycliques de façon que le faisceau incident décrive, lors de chaque cycle, un balayage angulaire adapté pour générer sur le plan-objet au moins une ligne élémentaire de balayage,
- des moyens d'asservissement (14, 15 ; 17, 18, 19 ; 20-24) des moyens moteurs (9), connectés, d'une part, à l'horloge de façon à recevoir le signal de transfert $\Phi_{TG}$, et d'autre part auxdits moyens moteurs, et adaptés pour synchroniser en phase et en fréquence le début de chaque cycle de balayage avec le signal $\Phi_{TG}$ délivré par l'horloge.

2. Dispositif optoélectronique selon la revendication 1, caractérisé en ce que :

- les moyens de déviation cycliques comprennent un polygone rotatif (8) comportant n facettes réfléchissantes (8a),
- les moyens moteurs comprennent un moteur pas à pas (9) sur lequel est monté le polygone rotatif (8), ledit moteur présentant un nombre de pas par tour égal à kn, avec k = x ou 1/x, x étant un nombre entier,
- les moyens d'asservissement comprennent des moyens de commande séquentielle (14, 15 ; 17-19) du moteur pas à pas (9) aptes à réaliser des phases de commande dudit moteur pas à pas synchronisées avec le signal $\Phi_{TG}$ délivré par l'horloge,

3. Dispositif optoélectronique selon la revendication 2, caractérisé en ce qu'il comprend des moyens d'ajustement préalable de la position angulaire du corps du moteur pas à pas (9).

4. Dispositif optoélectronique selon la revendication 3, caractérisé en ce que le corps (9b) du moteur (9) est disposé en sandwich entre deux éléments fixes (1, 3a) dans lesquels sont montés rotatifs les paliers (9a) dudit moteur, les moyens d'ajustement comportant des moyens de fixation du corps (9b) dudit moteur à au moins un desdits éléments fixes, après réglage préalable de la position angulaire dudit corps.

5. Dispositif optoélectronique selon l'une des revendications 2 à 4, caractérisé en ce que les moyens de commande séquentielle comprennent une électronique séquentielle comportant des bascules flip-flop (14, 15 ; 17-19) aptes à générer deux phases de pilotage du moteur pas à pas (9).

6. Dispositif optoélectronique selon l'une des revendications 2 à 5, caractérisé en ce que l'axe de rotation du miroir polygonal (8) est incliné par rapport aux arêtes des facettes (8a), d'un angle $\alpha$ adapté pour que chaque facette engendre une ligne de balayage décalée et parallèle à celle engendrée par les facettes voisines.

7. Dispositif optoélectronique selon la revendication 6, caractérisé en ce que l'angle $\alpha$ d'inclinaison de l'axe de rotation du polygone rotatif (8) est sensiblement égal au quart de l'angle sous-tendu par les arêtes délimitant une facette (8a).

8. Dispositif optoélectronique selon la revendication 1 comportant une horloge délivrant un signal pixel $\Phi_{pix}$ de lecture séquentielle de chaque image acquise par le capteur, caractérisé en ce que :

- les moyens de déviation cyclique comprennent un miroir oscillant monté sur des moyens moteurs aptes à le faire osciller avec une amplitude prédéterminée entre deux positions extrêmes,
- les moyens d'asservissement des moyens moteurs comprennent :
- des moyens de comptage (20) incrémentés par le signal $\Phi_{pix}$ de lecture séquentielle, et adaptés pour être remis à zéro lors de l'émission d'un signal de transfert $\Phi_{TG}$,
- des moyens de comparaison (21) de la valeur des moyens de comptage (20) avec une valeur mémorisée, obtenue par apprentissage préalable, représentative du déphasage nécessaire pour obtenir la synchronisation en phase du début de chaque cycle de balayage avec le signal $\Phi_{TG}$, lesdits moyens de comparaison étant adaptés pour délivrer un signal de synchronisation de phase lors de la correspondance entre la valeur mémorisée et la valeur des moyens de comptage (20).
- des moyens de commande (23, 24) des moyens moteurs recevant le signal de transfert $\Phi_{TG}$ et le signal de synchronisation de phase, et adaptés pour synchroniser lesdits moyens moteurs avec ledit signal de transfert $\Phi_{TG}$.

9. Dispositif optoélectronique selon la revendication 8, caractérisé en ce que les moyens de commande des moyens moteurs comprennent une électronique comportant des bascules D (23, 24) aptes à générer des signaux de commande en mode oscillatoire des moyens moteurs.

Fig 1

## Fig 2

Fig 3a

Fig 3b

Fig 4a

Fig 4b

Fig 5

Office européen des brevets

**RAPPORT DE RECHERCHE EUROPEENNE**

Numéro de la demande

EP 00 39 0014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 384 955 A (SYMBOL TECHNOLOGIES INC) 5 septembre 1990 (1990-09-05) * colonne 5, ligne 41 - colonne 7, ligne 55 * * colonne 9, ligne 24 - colonne 13, ligne 23 * --- | 1 | G06K7/10 |
| A | EP 0 690 401 A (SYMBOL TECHNOLOGIES INC) 3 janvier 1996 (1996-01-03) * colonne 5, ligne 32 - ligne 35 * * colonne 15, ligne 40 - colonne 17, ligne 15 * * colonne 25, ligne 15 - colonne 26, ligne 19 * * colonne 32, ligne 25 - colonne 33, ligne 34 * * colonne 35, ligne 49 - colonne 39, ligne 16 * --- | 1,2,8 | |
| A | EP 0 871 138 A (METROLOGIC INSTR INC) 14 octobre 1998 (1998-10-14) * colonne 12, ligne 19 - colonne 13, ligne 33 * --- | 1,2,8 | **DOMAINES TECHNIQUES RECHERCHES** (Int.Cl.7) G06K |
| A | US 5 767 500 A (CAMPANELLI JOSEPH ET AL) 16 juin 1998 (1998-06-16) * colonne 1, ligne 7 - colonne 3, ligne 34 * --- | 1 | |
| A | EP 0 940 703 A (FUJITSU LTD) 8 septembre 1999 (1999-09-08) * colonne 6, ligne 31-38 * --- | 2,6,7 | |
| A | EP 0 685 812 A (PSC INC) 6 décembre 1995 (1995-12-06) * colonne 7, ligne 17-41 * ----- | 2,6,7 | |

Le présent rapport a été établi pour toutes les revendications

| Lieu de la recherche | Date d'achèvement de la recherche | Examinateur |
|---|---|---|
| LA HAYE | 19 décembre 2000 | Bhalodia, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 00 39 0014

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2000

| Document brevet cité au rapport de recherche | | Date de publication | Membre(s) de la famille de brevet(s) | | Date de publication |
|---|---|---|---|---|---|
| EP 0384955 | A | 05-09-1990 | CA | 1334218 A | 31-01-1995 |
| | | | DE | 68928443 D | 18-12-1997 |
| | | | DE | 68928443 T | 04-06-1998 |
| | | | JP | 2268382 A | 02-11-1990 |
| | | | JP | 2792972 B | 03-09-1998 |
| | | | US | 5414250 A | 09-05-1995 |
| | | | US | 5637851 A | 10-06-1997 |
| EP 0690401 | A | 03-01-1996 | US | 5672858 A | 30-09-1997 |
| | | | CA | 2150730 A | 31-12-1995 |
| | | | JP | 8016699 A | 19-01-1996 |
| | | | US | 6095421 A | 01-08-2000 |
| | | | US | 6123264 A | 26-09-2000 |
| EP 0871138 | A | 14-10-1998 | US | 5340971 A | 23-08-1994 |
| | | | AT | 175509 T | 15-01-1999 |
| | | | CA | 2096427 C | 05-11-1996 |
| | | | DE | 69228111 D | 18-02-1999 |
| | | | DE | 69228111 T | 26-08-1999 |
| | | | DK | 557508 T | 30-08-1999 |
| | | | EP | 0557508 A | 01-09-1993 |
| | | | ES | 2129044 T | 01-06-1999 |
| | | | JP | 6502949 T | 31-03-1994 |
| | | | WO | 9306565 A | 01-04-1993 |
| | | | US | 6029894 A | 29-02-2000 |
| | | | US | 5484992 A | 16-01-1996 |
| | | | US | 5525789 A | 11-06-1996 |
| | | | US | 5528024 A | 18-06-1996 |
| | | | US | 5468951 A | 21-11-1995 |
| | | | US | 5627359 A | 06-05-1997 |
| | | | US | 5661292 A | 26-08-1997 |
| | | | US | 5616908 A | 01-04-1997 |
| | | | US | 5825012 A | 20-10-1998 |
| | | | US | 5886337 A | 23-03-1999 |
| | | | US | 5789730 A | 04-08-1998 |
| | | | US | 5777315 A | 07-07-1998 |
| | | | US | 5837989 A | 17-11-1998 |
| | | | US | 5925870 A | 20-07-1999 |
| | | | US | 5789731 A | 04-08-1998 |
| | | | US | 5979766 A | 09-11-1999 |
| | | | US | 5929419 A | 27-07-1999 |
| | | | US | 5811786 A | 22-09-1998 |
| | | | US | 5844229 A | 01-12-1998 |
| | | | US | 6015091 A | 18-01-2000 |
| | | | US | 5939701 A | 17-08-1999 |
| | | | US | 5340973 A | 23-08-1994 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 00 39 0014

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2000

| Document brevet cité au rapport de recherche | Date de publication | Membre(s) de la famille de brevet(s) | Date de publication |
|---|---|---|---|
| EP 0871138 A | | US 5883375 A<br>US 5925871 A | 16-03-1999<br>20-07-1999 |
| US 5767500 A | 16-06-1998 | AUCUN | |
| EP 0940703 A | 08-09-1999 | JP 11249055 A<br>CN 1233805 A | 17-09-1999<br>03-11-1999 |
| EP 0685812 A | 06-12-1995 | US 4820911 A<br>EP 0691621 A<br>AT 185210 T<br>AT 185209 T<br>DE 3751774 D<br>DE 3751774 T<br>DE 3752295 D<br>DE 3752295 T<br>DE 3752296 D<br>DE 3752296 T<br>EP 0256296 A<br>JP 63259781 A<br>JP 10134136 A<br>JP 2729042 B<br>JP 8305786 A | 11-04-1989<br>10-01-1996<br>15-10-1999<br>15-10-1999<br>23-05-1996<br>05-09-1996<br>04-11-1999<br>05-01-2000<br>04-11-1999<br>05-01-2000<br>24-02-1988<br>26-10-1988<br>22-05-1998<br>18-03-1998<br>22-11-1996 |

EPO FORM P0460

Pour tout renseignement concernant cette annexe : voir Journal Officiel de l'Office européen des brevets, No.12/82